# EUROPÄISCHE PATENTSCHRIFT

(11) **EP 2 344 267 B1**
(45) Veröffentlichungstag und Bekanntmachung des Hinweises auf die Patenterteilung: **14.05.2014**
(21) Anmeldenummer: 09751903.7
(22) Anmeldetag: 11.11.2009
(51) Int. Cl.: B01D 46/10, B01D 46/52

(54) **LUFTFILTEREINSATZ**
AIR FILTER INSERT
ÉLÉMENT DE FILTRE À AIR

(30) Priorität: 13.11.2008 DE 202008015078 U
(43) Veröffentlichungstag der Anmeldung: 20.07.2011
(73) Patentinhaber: Mann + Hummel GmbH, 71638 Ludwigsburg (DE)
(72) Erfinder: SUDERMANN, Arthur, 70825 Münchingen (DE)
(86) Internationale Anmeldenummer: PCT/EP2009/064983
(87) Internationale Veröffentlichungsnummer: WO 2010/055054

(56) Entgegenhaltungen:
- EP-A1- 0 486 846
- EP-A1- 1 380 334
- EP-A1- 1 498 171
- DE-U1- 9 116 336
- US-A1- 2004 020 177
- US-A1- 2004 194 441
- US-A1- 2006 080 949
- US-B1- 6 830 443

## Beschreibung

### Technisches Gebiet

Die Erfindung bezieht sich auf eine Luftfiltereinrichtung nach dem Oberbegriff des Anspruches 1 sowie einen Luftfiltereinsatz für eine solche Luftfiltereinrichtung nach Anspruch 7.

### Stand der Technik

In der EP 0 863 785 B1 wird eine Luftfiltereinrichtung beschrieben, die beispielsweise zur Filtration der einer Brennkraftmaschine zuzuführenden Ansaugluft eingesetzt wird. Die Luftfiltereinrichtung umfasst einen Luftfiltereinsatz, der aus einem gefalteten Filtermedium besteht, welches von einem Rahmen eingefasst ist, wobei der Rahmen umlaufende Dichtungstaschen mit eingegossener Silikonschaumdichtung aufweist. Der Silikonschaum ist zum Filtermedium hin von einer Seitenwand der Dichtungstasche im Rahmen getrennt, wobei ein Teil des Silikonschaums sich bis in den axialen Bereich des Filtermediums erstreckt. Die US2006/0080949 A1 beschreibt eine Luftfiltereinrichtung mit einem Gehäusekörper und einen Filter, welcher dichtend in den Dichtrahmen angeordnet ist. Die DE 91 16 336 U1 beschreibt eine Luftfiltereinrichtung mit einem Luftfiltergehäuse und einem Luftfiltereinsatz, der ein gefaltetes Filtermedium, an welchem ein Stütz-/Dichtrahmen unmittelbar angegossen ist, aufweist. Im eingebauten Zustand dient der Stütz-/Dichtrahmen dazu, ein Gehäuseoberteil und -unterteil gegeneinander abzudichten.

Von diesem Stand der Technik ausgehend liegt der Erfindung die Aufgabe zugrunde, eine Luftfiltereinrichtung bzw. einen Luftfiltereinsatz in Material sparender Weise so auszubilden, dass eine zuverlässige Abdichtung im eingesetzten Zustand des Luftfiltereinsatzes gegeben ist.

### Offenbarung der Erfindung

Diese Aufgabe wird erfindungsgemäß mit den Merkmalen des Anspruches 1 und den Merkmalen des Anspruches 7 gelöst. Die Unteransprüche geben zweckmäßige Weiterbildungen an.

Die erfindungsgemäße Luftfiltereinrichtung bzw. der erfindungsgemäße Luftfiltereinsatz werden vorzugsweise für die Filtration von Ansaugluft für Brennkraftmaschinen eingesetzt. Grundsätzlich kommt aber auch eine Anwendung beispielsweise für die Filtration der dem Fahrzeuginnenraum zuzuführenden Luft in Betracht.

Der Luftfiltereinsatz ist Bestandteil der Luftfiltereinrichtung, die ein Gehäuse mit einem Gehäusedeckel umfasst, wobei im montierten Zustand die außen liegenden Seiten der Kontaktabschnitte des Dichtelementes, welches sich unmittelbar am Filtermedium des Luftfiltereinsatzes befindet, an Dichtflächen an der Innenseite des Gehäuses bzw. des Deckels dichtend anliegen. Gemäß der Erfindung ist vorgesehen, dass das Filtermedium, welches von dem zu reinigenden, gasförmigen Fluid durchströmt wird, vorzugsweise als Papierfilter ausgeführt und zickzackförmig gefaltet ist, wobei an mindestens einer Seitenkante des gefalteten Filtermediums ein Dichtelement angeordnet ist, das einen ersten, sich in Axialrichtung erstreckenden Kontaktabschnitt und einen zweiten, sich in Radialrichtung (quer zur Axialrichtung) erstreckenden Kontaktabschnitt für die Abdichtung aufweist. Die beiden Kontaktabschnitte des Dichtelementes hängen zusammen und sind unmittelbar an die Seitenkante des Filtermediums aufgebracht, wobei die jeweils außen liegenden Seiten der Kontaktabschnitte des Dichtelementes Anlageflächen für das Gehäuse bzw. den Deckel der Luftfiltereinrichtung bilden.

Das in dieser Weise ausgeführte Dichtelement ist im Querschnitt winkelförmig ausgeführt, wobei die beiden Schenkel jeweils einen Kontaktabschnitt zur Anlage an die Innenseite des Gehäuses bzw. die Innenseite des Deckels bilden.

Diese Ausführung weist verschiedene Vorteile auf. Die sich in Achsrichtung und in Radialrichtung erstreckenden Kontaktabschnitte des Dichtelementes sind im montierten Zustand bei aufgesetztem Deckel in Achsrichtung sowie in Radialrichtung kraftbeaufschlagt und dadurch verpresst, wodurch eine sehr gute Dichtigkeit gegeben ist und Fehlluftströme zwischen Roh- und Reinseite sicher verhindert werden. Die verbesserte Dichtigkeit wird zugleich mit einem verringerten Materialeinsatz für das Dichtelement erreicht, da auf Grund der Verpressung des Dichtelements in zwei zueinander senkrecht stehende Richtungen der Aufnahmeraum für das Dichtelement besser ausgefüllt wird. Es sind geringere Dichtungsquerschnitte als bei Ausführungen im Stand der Technik realisierbar, ohne dass dies zu Lasten der Dichtigkeit geht.

Ein weiterer Vorteil liegt in dem unmittelbaren Aufbringen des Dichtelementes an das Material des gefalteten Filtermediums. Dies erfolgt insbesondere durch Anbringen des Dichtelementmaterials mithilfe von Gießschalen an das Filtermedium, so dass auf einen zusätzlichen Rahmen, welcher das Filtermedium einfasst, grundsätzlich verzichtet werden kann. Da sich das Dichtmaterial nicht nur an der radialen Außenseite des Filtermediums erstreckt, sondern teilweise mit einem Schenkel bzw. Kontaktabschnitt auch im Randbereich der axialen Stirnfläche, wird eine zusätzliche Stabilisierung und Verfestigung des Filtermediums erreicht.

Gemäß einer weiteren Ausführung kann es aber zweckmäßig sein, einen Filterrahmen vorzusehen, wobei auch in diesem Fall das Dichtelement zweckmäßigerweise unmittelbar auf das Filtermedium aufgebracht ist.

Gemäß einer zweckmäßigen Weiterbildung ist vorgesehen, dass die Kontaktabschnitte des Filterelements mit abgeflachten Kanten versehen sind. Derartige Abflachungen können sowohl im Bereich der jeweiligen freien Stirnseiten der Kontaktabschnitte als auch im Übergangsbereich zwischen erstem und zweitem Kontaktabschnitt vorhanden sein.

Das Filterelement ist vorzugsweise rechteckförmig oder beispielsweise auch trapezförmig ausgebildet und kann ggf. eine einseitige Abschrägung aufweisen, wobei Dichtelemente mit jeweils einem ersten und einem zweiten Kontaktabschnitt sich zweckmäßigerweise an mindestens zwei gegenüberliegenden Seitenflächen erstrecken, insbesondere an den Längsseiten des Filtermediums. Gegebenenfalls handelt es sich um ein umlaufendes Dichtelement, das an allen vier Seitenflächen des Filtermediums den gleichen Querschnitt aufweist. In einer alternativen Ausführung ist es aber auch möglich, dass nur zwei gegenüberliegende Seitenflächen des Filtermediums mit dem erfindungsgemäßen Dichtelement versehen sind, wohingegen die zwei weiteren Seitenflächen des Filtermediums mit einem Dichtelement mit alternativem Querschnitt versehen sind, der beispielsweise einen Einschnitt aufweist, mit dem das Dichtelement an dieser Stelle auf eine Trägerkante am Gehäuse aufsteckbar ist.

Einteilig mit dem Gehäuse und/oder mit dem Deckel kann mindestens eine Querrippe ausgebildet sein, die sich zwischen gegenüberliegenden Dichtflächen am Gehäuse bzw. Deckel erstreckt, welche im montierten Zustand auf Kontakt zu den Kontaktabschnitten des Dichtelements liegen. Die Querrippe dient dazu, die auftretende Kraft zwischen Dichtung und Gehäuse bzw. Deckel besser aufzunehmen und einer Verformung des Gehäuses bzw. des Deckels vorzubeugen. Damit ist über einen langen Betriebszeitraum eine bessere Dichtigkeit gewährleistet.

Das Dichtelement besteht zweckmäßigerweise aus einem Polyurethan-Schaum (PUR), welcher an die Seite des Filtermediums angegossen wird.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
Fig. 1 eine Draufsicht auf einen Luftfiltereinsatz, der aus einem gefalteten Filtermedium besteht, wobei die Seitenkanten des Filtermediums mit einem umlaufenden Dichtelement versehen sind,
Fig. 2 einen Schnitt gemäß Schnittlinie II-II aus Fig. 1 im Bereich der Längsseite durch das Dichtelement, mit strichliert eingezeichnetem Gehäuse, in das der Luftfiltereinsatz eingesetzt wird,
Fig. 3 ebenfalls ein Schnitt gemäß Schnittlinie II-II aus Fig. 1, jedoch mit einem strichliert angedeuteten Deckel,
Fig. 4 einen Schnitt gemäß Schnittlinie IV-IV aus Fig. 1 im Bereich der Schmalseite des Luftfiltereinsatzes.

In den Figuren sind gleiche Bauteile mit gleichen Bezugszeichen versehen.

### Ausführungsformen der Erfindung

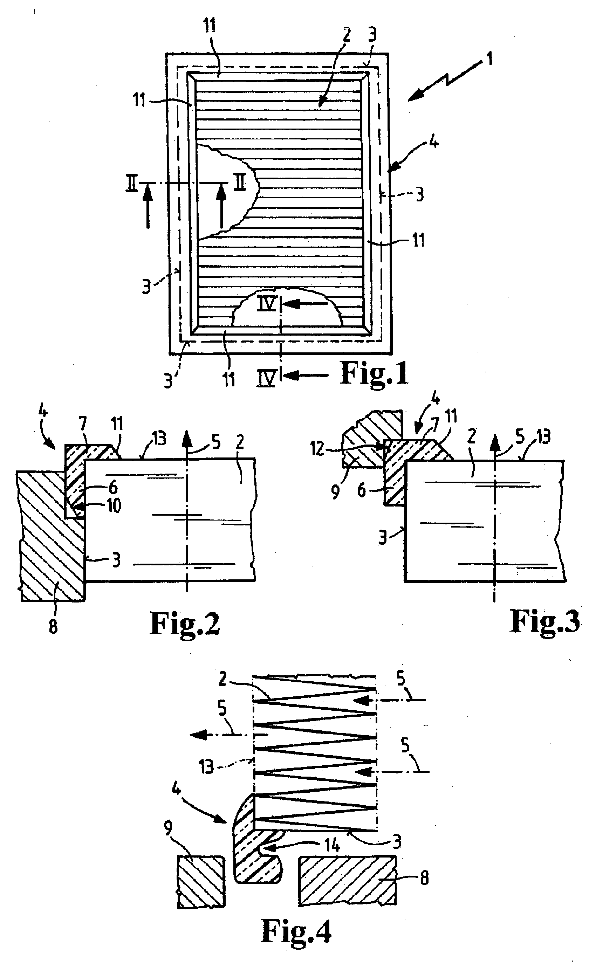

In Fig. 1 ist ein Luftfiltereinsatz 1 für eine Luftfiltereinrichtung dargestellt, die insbesondere zur Filtration der Ansaugluft in Brennkraftmaschinen eingesetzt wird. Der Luftfiltereinsatz 1 besteht aus einem Filtermedium 2, das als gefaltetes Filterpapier ausgeführt ist und an dessen Seitenkanten 3 ein umlaufendes Dichtelement 4 angeordnet ist. Der Luftfiltereinsatz 1 ist rechteckförmig aufgebaut, wobei sowohl an den Längsseiten als auch an den Schmalseiten ein Dichtelement 4 angeordnet ist.

Die Figuren 2 und 3 zeigen Schnittdarstellungen gemäß Schnittlinie II-II aus Fig. 1 durch das Dichtelement 4 im Bereich der Längsseiten des Luftfiltereinsatzes. Das Filtermedium 2 wird wie mit gestricheltem Pfeil 5 dargestellt axial von dem zu reinigenden, gasförmigen Fluid durchströmt. Das Dichtelement 4 besteht aus zwei zusammenhängenden, einteilig ausgebildeten, schenkelförmigen Kontaktabschnitten 6 und 7, die unmittelbar an der Außenseite der Seitenkante 3 bzw. an der Oberseite 13, die zugleich die Reinseite bildet, des Filtermediums 2 anliegen. Somit besitzt das Dichtelement 4 entlang der Längsseite des Filtermediums einen winkelförmigen Querschnitt, wobei die beiden schenkelförmigen Kontaktabschnitte 6 und 7 eine zumindest annähernd gleiche Erstreckung aufweisen können. Das Dichtelement 4 besteht vorzugsweise aus einem PUR-Schaum und wird insbesondere an die Seitenkante 3 angegossen.

Die Kanten des Dichtelementes 4 können Abflachungen 10, 11, 12 aufweisen, die ein Einsetzen in Aufnahmeabsätze, die im Gehäuse 8 bzw. im Deckel 9 gebildet sind, erleichtern. Darüber hinaus ist der Raum in den Aufnahmeabsätzen auf Grund der Abflachungen im unverformten Zustand des Dichtelementes nicht vollständig ausgefüllt und wird erst mit einem axialen bzw. radialen Verpressen des Dichtelementes ausgefüllt, bei dem sich das Material des Dichtelementes in die verbleibenden Wandbereiche hinein ausdehnt. Im Ausführungsbeispiel können derartige Abflachungen bzw. Fasen 10, 11, 12 an der freien Stirnseite des sich in Achsrichtung erstreckenden Kontaktabschnittes 6, an der freien Stirnseite des sich in Radialrichtung erstreckenden zweiten Kontaktabschnittes 7 sowie im Übergangsbereich zwischen den beiden Kontaktabschnitten 6, 7 vorgesehen sein. Insbesondere die Fasen 10 und 12 haben die Funktion von Mantagehilfen, da der Einbau aufgrund der Fasen erleichtert ist.

Im eingebauten Zustand wird, wie in Fig. 2 dargestellt, der untere Teil des sich in Achsrichtung erstreckenden Kontaktabschnittes 6 von einer Schulter im Gehäuse 8 sowohl in Achsrichtung als auch quer hierzu, also in Radialrichtung mit einer Klemmkraft beaufschlagt. Wie Fig. 3 zu entnehmen, wirkt der Deckel 9 auf den oberen Teil des sich in Achsrichtung erstreckenden Kontaktabschnittes 6 sowie auf den hierzu senkrecht verlaufenden, sich in Radialrichtung erstreckenden zweiten Kontaktabschnitt 7, wobei das Dichtelement 4 von einer Schulter im Deckel sowohl in Achsrichtung als auch in Radialrichtung mit einer Klemmkraft beaufschlagt wird.

Fig. 4 zeigt einen Schnitt gemäß Schnittlinie IV-IV durch die Schmalseite des Luftfiltereinsatzes, an der das Dichtelement 4 mit einem alternativen Querschnitt versehen ist. Das Dichtelement 4 ist an dieser Seite ebenfalls an die obere Kante 13 des Filtermediums 2 angegossen, es weist einen Querschnitt auf, in den ein Einschnitt 14 eingebracht ist, mit dem das Dichtelement 4 auf eine Trägerkante (nicht dargestellt) insbesondere am Gehäuse 8 aufsteckbar ist.

Gegebenenfalls ist das Dichtelement 4 aber auch an der Längsseite des Filtermediums wie in den Figuren 2 und 3 dargestellt ausgebildet.

## Patentansprüche

1. Luftfiltereinrichtung mit einem Gehäuse (8), einem Deckel (9) und mit einem Luftfiltereinsatz, bestehend aus einem gefalteten Filtermedium (2), welches von zu einem zu reinigenden gasförmigen Fluid zu durchströmen ist, wobei an mindestens einer Seitenkante (3) des gefalteten Filtermediums (2) ein Dichtelement (4) angeordnet ist, wobei ein erster Kontaktabschnitt (6) des Dichtelements (4) sich entlang der Seitenkante (3) des Filtermediums (2) in Axialrichtung erstreckt, die zugleich die Durchströmrichtung durch das Filtermedium (2) darstellt, und ein weiterer Kontaktabschnitt (7) des Dichtelements (4) sich entlang der Seitenkante (3) des Filtermediums (2) in Radialrichtung quer zur Axialrichtung erstreckt, wobei beide Kontaktabschnitte (6, 7) des Dichtelements (4) unmittelbar auf die Seitenkante (3) aufgebracht sind, **dadurch gekennzeichnet, dass** die jeweils außenliegenden Seiten der Kontaktabschnitte (6, 7) des Dichtelements (4) Anlageflächen für das Gehäuse (8) bzw. den Deckel (9) der Luftfiltereinrichtung derart bilden, dass die außenliegenden Seiten der Kontaktabschnitte (6, 7) im montierten Zustand an Dichtflächen an der Innenseite des Gehäuses (8) bzw. des Deckels (9) dichtend anliegen.

2. Luftfiltereinrichtung nach Anspruch 1, **dadurch gekennzeichnet, dass** die Kontaktabschnitte (6, 7) des Dichtelements (4) mit abgeflachten Kanten (10, 11, 12) versehen sind.

3. Luftfiltereinrichtung nach Anspruch 1 oder 2, **dadurch gekennzeichnet, dass** das Dichtelement (4) unmittelbar an das gefaltete Filtermedium (2) angespritzt oder angegossen ist.

4. Luftfiltereinrichtung nach einem der Ansprüche 1 bis 3, **dadurch gekennzeichnet, dass** das Dichtelement (4) an mindestens zwei Seiten des rechteckförmigen Filterelements angeordnet ist.

5. Luftfiltereinrichtung nach einem der Ansprüche 1 bis 4, **dadurch gekennzeichnet, dass** das Dichtelement (4) aus Polyurethan-Schaum (PUR) besteht.

6. Luftfiltereinrichtung nach einem Ansprüche 1 bis 5, **dadurch gekennzeichnet, dass** das Gehäuse (8) und/oder der Deckel (9) mit mindestens einer Querrippe versehen ist, die sich zwischen gegenüberliegenden Dichtflächen am Gehäuse (8) bzw. Deckel (9) erstreckt.

7. Luftfiltereinsatz für eine Luftfiltereinrichtung nach einem der Ansprüche 1 bis 6, bestehend aus einem gefalteten Filtermedium (2), welches von zu einem zu reinigenden gasförmigen Fluid zu durchströmen ist, wobei an mindestens einer Seitenkante (3) des gefalteten Filtermediums (2) ein Dichtelement (4) angeordnet ist, wobei ein erster Kontaktabschnitt (6) des Dichtelements (4) sich entlang der Seitenkante (3) des Filtermediums (2) in Axialrichtung erstreckt, die zugleich die Durchströmrichtung durch das Filtermedium (2) darstellt, und ein weiterer Kontaktabschnitt (7) des Dichtelements (4) sich entlang der Seitenkante (3) des Filtermediums (2) in Radialrichtung quer zur Axialrichtung erstreckt, wobei beide Kontaktabschnitte (6, 7) des Dichtelements (4) unmittelbar auf die Seitenkante (3) aufgebracht sind, wobei die jeweils außenliegenden Seiten der Kontaktabschnitte (6, 7) des Dichtelements (4) Anlageflächen für ein Gehäuse (8) bzw. einen Deckel (9) einer Luftfiltereinrichtung bilden, und wobei das Dichtelement (4) an mindestens zwei Seiten des rechteckförmigen Filterelements angeordnet ist, **dadurch gekennzeichnet, dass** an mindestens einer Seite des Filterelements ein Dichtelement (4) mit alternativem Querschnitt angeordnet ist.

8. Luftfiltereinsatz nach Anspruch 7, **dadurch gekennzeichnet, dass** das Dichtelement (4) mit alternativem Querschnitt einen sich in Füge- bzw. Löserichtung des Deckels (9) erstreckenden Einschnitt (14) aufweist, mit dem das Dichtelement (4) auf eine Trägerkante am Gehäuse (8) aufsteckbar ist.

## Claims

1. Air filter device with a housing (8), a cover (9) and with an air filter insert, consisting of a folded filter medium (2) which is to be flowed through by a gaseous fluid to be cleaned, wherein at at least one lateral edge (3) of the folded filter medium (2) is disposed a sealing element (4), wherein a first contact section (6) of the sealing element (4) extends along the lateral edge (3) of the filter medium (2) in axial direction which represents at the same time the flow direction through the filter medium (2), and a further contact section (7) of the sealing element (4) extends along the lateral edge (3) of the filter medium (2) in radial direction transversely to the axial direction, wherein both contact sections (6, 7) of the sealing element (4) are directly applied to the lateral edge (3), **characterized in that** the respective external sides of the contact sections (6, 7) of the sealing element (4) form contact areas for the housing (8) and the cover (9), respectively, of the air filter device in such a way that the external sides of the contact sections (6, 7) sealingly abut in mounted state on sealing surfaces on the interior side of the housing (8) and the cover (9), respectively.

2. Air filter device according to claim 1, **characterized in that** the contact sections (6, 7) of the sealing element (4) are provided with flattened edges (10, 11, 12).

3. Air filter device according to claim 1 or 2, **characterized in that** the sealing element (4) is directly injection molded or cast on to the folded filter medium (2).

4. Air filter device according to one of the claims 1 to 3, **characterized in that** the sealing element (4) is disposed on at least two sides of the rectangular filter element.

5. Air filter device according to one of the claims 1 to 4, **characterized in that** the sealing element (4) is made of polyurethane foam (PUR).

6. Air filter device according to one of the claims 1 to 5, **characterized in that** the housing (8) and/or the cover (9) is provided with at least one transverse rib which extends between opposing sealing surfaces at the housing (8) and the cover (9), respectively.

7. Air filter insert for an air filter device according to one of the claims 1 to 6, consisting of a folded filter medium (2) which is to be flowed through by a gaseous fluid to be cleaned, wherein at at least one lateral edge of the folded filter medium (2) is disposed a sealing element (4), wherein a first contact section (6) of the sealing element (4) extends along the lateral edge (3) of the filter medium (2) in axial direction which represents at the same time the flow direction through the filter medium (2), and a further contact section (7) of the sealing element (4) extends along the lateral edge (3) of the filter medium (2) in radial direction transversely to the axial direction, wherein both contact sections (6, 7) of the sealing element (4) are directly applied to the lateral edge (3), wherein the respective external sides of the contact sections (6, 7) of the sealing element (4) form contact areas for a housing (8) and a cover (9), respectively, of an air filter device and wherein the sealing element (4) is disposed on at least two sides of the rectangular filter element, **characterized in that** on at least one side of the filter element is disposed a sealing element (4) with an alternative cross-section.

8. Air filter insert according to claim 7, **characterized in that** the sealing element (4) with an alternative cross-section features a notch (14) extending in assembling and disassembling direction, respectively, of the cover (9) with which the sealing element (4) can be plugged onto a carrier edge at the housing (8).

## Revendications

1. Dispositif à filtre à air avec un boîtier (8), un couvercle (9) et un insert de filtre à air, comprenant un milieu filtrant (2) plié qui peut être parcouru par un fluide gazeux à purifier, un élément d'étanchéité (4) étant disposé sur au moins une arête latérale (3) du milieu filtrant (2) plié, une première section de contact (6) de l'élément d'étanchéité (4) s'étendant en sens axial le long de l'arête latérale (3) du milieu filtrant (2) et déterminant simultanément la direction de flux à travers le milieu filtrant (2), et une autre section de contact (7) de l'élément d'étanchéité (4) s'étendant en sens radial, en travers du sens axial, le long de l'arête latérale (3) du milieu filtrant (2), les deux sections de contact (6, 7) de l'élément d'étanchéité (4) étant montées directement sur l'arête latérale (3), **caractérisé en ce que** les bords extérieurs respectifs des sections de contact (6, 7) de l'élément d'étanchéité (4) forment des surfaces de contact pour le boîtier (8) et/ou pour le couvercle (9) du dispositif à filtre à air de manière à ce que les bords extérieurs des sections de contact (6, 7) soient appliqués, lorsqu'ils sont montés, de manière étanche sur les surfaces d'étanchéité de la face intérieure du boîtier (8) et/ou du couvercle (9).

2. Dispositif à filtre à air selon la revendication 1, **caractérisé en ce que** les sections de contact (6, 7) de l'élément d'étanchéité (4) sont pourvus de bords plats (10, 11, 12).

3. Dispositif à filtre à air selon la revendication 1 ou 2, **caractérisé en ce que** l'élément d'étanchéité (4) est injecté ou moulé directement sur le milieu filtrant (2) plié.

4. Dispositif à filtre à air selon l'une des revendications 1 à 3, **caractérisé en ce que** l'élément d'étanchéité (4) est disposé sur au moins deux côtés de l'élément filtrant rectangulaire.

5. Dispositif à filtre à air selon l'une des revendications 1 à 4, **caractérisé en ce que** l'élément d'étanchéité (4) est fait de mousse polyuréthane (PUR).

6. Dispositif à filtre à air selon l'une des revendications 1 à 5, **caractérisé en ce que** le boîtier (8) et/ou le couvercle (9) est pourvu d'au moins une nervure transversale qui évolue entre des surfaces d'étanchéité opposées du boîtier (8) et/ou du couvercle (9).

7. Insert de filtre à air pour un dispositif à filtre à air selon l'une des revendications 1 à 6, constitué d'un milieu filtrant (2) plié qui peut être parcouru par un fluide gazeux à purifier, un élément d'étanchéité (4) étant disposé sur au moins une arête latérale du milieu filtrant (2) plié, une première section de contact (6) de l'élément d'étanchéité (4) s'étendant en sens axial le long de l'arête latérale (3) du milieu filtrant (2) et déterminant simultanément la direction de flux à travers le milieu filtrant (2), et une autre section de contact (7) de l'élément d'étanchéité (4) s'étendant en sens radial, en travers du sens axial, le long de l'arête latérale (3) du milieu filtrant (2), les deux sections de contact (6, 7) de l'élément d'étanchéité (4) étant montées directement sur l'arête latérale (3), les bords extérieurs respectifs des sections de contact (6, 7) de l'élément d'étanchéité (4) formant des surfaces de contact pour un boîtier (8) et/ou pour un couvercle (9) d'un dispositif à filtre à air, et l'élément d'étanchéité (4) étant disposé sur au moins deux côtés de l'élément filtrant rectangulaire, **caractérisé en ce qu**'un élément d'étanchéité (4) avec une section alternative est disposé sur au moins un côté de l'élément filtrant.

8. Insert de filtre à air selon la revendication 7, **caractérisé en ce que** l'élément d'étanchéité (4) avec la section alternative présente une entaille (14) s'étendant dans le sens d'assemblage ou de désassemblage du couvercle (9) au moyen de laquelle l'élément d'étanchéité (4) peut être monté sur un bord porteur du boîtier (8).
